# EUROPÄISCHE PATENTSCHRIFT

(11) **EP 2 345 497 B1**
(45) Veröffentlichungstag und Bekanntmachung des Hinweises auf die Patenterteilung: **04.09.2013**
(21) Anmeldenummer: 10000287.2
(22) Anmeldetag: 14.01.2010
(51) Int. Cl.: B23C 3/36, B23C 5/04, B23F 21/16

(54) **Verfahren zum Herstellen eines Wälzfräsers**
Method for producing a hob
Procédé destiné à la fabrication d'une fraise mère développante

(43) Veröffentlichungstag der Anmeldung: 20.07.2011
(73) Patentinhaber: LMT Fette Werkzeugtechnik GmbH & Co. KG, 21493 Schwarzenbek (DE)
(72) Erfinder: Kretzschmann, Uwe, 21483 Wangelau (DE); Schunk, Uwe, 23554 Lübeck (DE)
(74) Vertreter: Mönkemeyer, Philipp

(56) Entgegenhaltungen:
- DE-A1- 10 319 163
- US-A- 3 892 022

## Beschreibung

Die Erfindung betrifft ein Verfahren zum Herstellen eines Wälzfräsers mit einer Mehrzahl von an einem Fräskörper vorgesehenen Zähnen. Solche Wälzfräser weisen überlicherweise einen zylinderischen Fräskörper auf, über dessen Umfang sich eine Vielzahl von Zähnen verteilt. Im Betrieb unterliegen die Zähne einem starken Verschleiß, so dass eine regelmäßige Nachbearbeitung bzw. Aufbereitung erforderlich ist. Für die Erstherstellung der Zähne wird überlicherweise ein Fräs- oder Drechverfahren eingesetzt, wobei eine anschließende schleifende Fertigbearbeitung der Zähne erforderlich ist. Diese Vorgehensweise ist von erheblichem Aufwand und damit kostenintensiv. Darüber hinaus besteht eine geringe Flexibilität hinsichtlich der Gestaltung der Zähne. Eine flexiblere Gestaltung der Zahnform wäre jedoch in Hinblick auf die unterschiedlichen Anwendungsgebiete von Wälzfräsem wünschenswert.

Aus US 3 892 022 A ist ein Wälzfräser bekannt mit einem gewellten Schneidkantenprofil. Aus DE 103 19 163 A1 ist ein Wälzfräser mit Spanbrechern bekannt, die durch ein Hinterdrehschleifen hergestellt sind.

Ausgehend von dem erläuterten Stand der Technik liegt der Erfindung die Aufgabe zugrunde, ein Verfahren der eingangs genannten Art bereitzustellen, mit dem in einfacher, schneller und damit kostengünstiger Weise eine flexible Formgestaltung der Zähne eines Wälzfräsers möglich ist.

Die Erfindung löst diese Aufgabe durch den Gegenstand von Anspruch 1. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass der Fräskörper in eine Fräsmaschine eingespannt wird und in der Fräsmaschine mittels eines Fertigfräsverfahrens an mindestens einem der Zähne ein Formelement ausgebildet wird. Der Fräskörper des erfindungsgemäß bereitgestellten Wälzfräsers kann beispielsweise zylindrisch sein. Mittels des Fertigfräsverfahrens können an einer Mehrzahl von Zähnen, insbesondere an sämtlichen Zähnen, Formelemente ausgebildet werden. Erfindungsgemäß können Formelemente beispielsweise im Bereich der Flanken, beispielsweise der einlaufenden und/oder auslaufenden Flanke, eines oder mehrerer Zähne und/oder am Kopf eines oder mehrerer Zähne ausgebildet werden. Die Formelemente können auf einer Span- und/oder Freifläche eines oder mehrerer Zähne ausgebildet werden, beispielsweise in der Nähe der ein- und/oder auslaufenden Flanken oder des Zahnkopfes. Die erfindungsgemäß genutzte Fräsmaschine umfasst eine geeignete Steuereinrichtung, die gemäß Bedienervorgaben die gewünschten Formelemente bzw. Zahnformen automatisch ausbildet. Das erfmdungsgemäße Fräsverfahren zur Ausbildung des mindestens einen Formelements stellt dabei eine Fertigbearbeitung des Wälzfräsers dar. Es ist also kein anschließendes Bearbeiten, beispielsweise Schleifen, mehr erforderlich. Mit nur einem Verfahren, dem Fertigfräsverfahren, ist erfindungsgemäß also in einfacher, kostengünstiger und schneller Weise eine flexible und individuelle Ausgestaltung der Zähne von Wälzfräsern möglich. Durch die Ausgestaltung von Formelementen an den Zähnen können die Wälzfräser dabei für den jeweiligen Einsatzzweck optimiert werden. Die erfindungsgemäß hergestellten Wälzfräser können beispielsweise aus einem Stahlwerkstoff, zum Beispiel HSS, bestehen.

Nach einer Ausgestaltung kann ein Fräskörperrohling ohne Zähne in die Fräsmaschine eingespannt werden und in der Fräsmaschine mittels des Fräsverfahrens so wohl die Zähne an dem Fräskörper als auch das mindestens eine Formelement an mindestens einem der Zähne ausgebildet werden. Bei dieser Ausgestaltung erfolgt also insbesondere eine (Erst-)Herstellung des Wälzfräsers. Dabei können mit dem erfindungsgemäßen Fertigfräsverfahren aus dem beispielsweise zylindrischen Fräskörperrohling in einem gemeinsamen Arbeitsvorgang sowohl die Zähne als auch ein oder mehrere Formelemente ausgebildet werden. Es ist allerdings auch möglich, die Zähne und die Formelemente in nacheinander erfolgenden Arbeitsvorgängen auszubilden. In beiden Fällen ermöglicht das erfindungsgemäße Verfahren eine schnelle, flexible und kostengünstige Herstellung eines Wälzfräsers. Es ist andererseits auch möglich, dass in die Fräsmaschine ein bereits Zähne und gegebenenfalls bereits mindestens ein Formelement aufweisender Fräskörper eingespannt wird. Der Fräskörper kann dann in der Fräsmaschine bearbeitet werden, wobei wiederum mindestens ein Formelement ausgebildet bzw. nachgearbeitet wird. Diese Bearbeitung kann zum Beispiel im Rahmen einer Aufbereitung bzw. Nachbearbeitung nach einem Verschleiß des Wälzfräsers erfolgen. Dabei können selbstverständlich auch die Zähne mittels des erfindungsgemäßen Fräsverfahrens nachgearbeitet werden. Wiederum ist nur ein Fertigfräsverfahren erforderlich, um die Aufbereitung der Formelemente und gegebenenfalls der Zähne durchzuführen. Beim Stand der Technik erfolgt die Aufbereitung der Wälzfräserzähne dagegen durch ein Schleifverfahren.

Nach einer bevorzugten Ausgestaltung kann das mindestens eine Formelement eine Spanleitstufe bzw. Spanformstufe sein. Das mindestes eine Formelement ist also dazu ausgebildet, die Spanbildung bzw. den Spanfluss im Betrieb des Wälzfräsers zu beeinflussen. Die Spanleitstufe kann dabei insbesondere an der Spanfläche des jeweiligen Zahns vorgesehen sein, beispielsweise im Bereich der ein- und/oder auslaufenden Zahnkanten. Derartige Spanleitstufen bzw. Spanformstufen können mit dem erfindungsgemäßen Verfahren in einfacher, flexibler und kostengünstiger Weise auch an Wälzfräsern ausgebildet werden. Dadurch lassen sich die Eigenschaften des Wälzfräsers im Betrieb in geeigneter Weise optimieren.

Um die für die erfindungsgemäße flexible Ausbildung der Formelemente und/oder Zähne erforderlichen Bewegungsfreiheitsgrade beim Fräsen sicherzustellen, kann das Fräsverfahren in einer mindestens fünf Bewegungsachsen aufweisenden Fräsmaschine durchgeführt werden. Mit einem solchen Fräsverfahren sind weitgehend beliebige Formgebungen möglich, wobei in einfacher Weise eine individuelle Ausgestaltung einzelner Zähne bzw. Formelemente ermöglicht wird. Für das Einbringen der Formelemente wird beispielsweise ein Schaftfräser verwendet.

Wie erläutert, erlaubt das erfindungsgemäße Verfahren eine individuelle Ausgestaltung der Formelemente bzw. Zähne je nach den besonderen Betriebsanforderungen. So kann das mindestens eine Formelement mit mindestens einer Erhebung und/oder mindestens einer Vertiefung ausgebildet werden. Es können beispielsweise mehrere Erhebungen und/oder mehrere Vertiefungen oder beliebige Kombinationen solcher Erhebungen und Vertiefungen an einem oder mehreren Zähnen vorgesehen werden. Nach einer weiteren Ausgestaltung kann mindestens ein Formelement im Bereich einer ersten bzw. linken Flanke und/oder im Bereich einer zweiten bzw. rechten Flanke und/oder im Bereich eines Zahnkopfes eines Zahns ausgebildet werden. Die erste Flanke bzw. die zweite Flanke eines Zahns können je nach Bearbeitungsrichtung des Wälzfräsers die einlaufende bzw. auslaufende Flanke des Zahns sein. Das mindestens eine Formelement kann insbesondere an einer Span- und/oder Freifläche eines Zahns im Bereich ihres Übergangs in die linke und/oder rechte Flanke und/oder den Zahnkopf vorgesehen sein. Es ist dann weiter möglich, dass das mindestens eine Formelement im Bereich der ersten bzw. linken Flanke anders ausgebildet wird als im Bereich der zweiten bzw. rechten Flanke und/oder dass das mindestens eine Formelement an oder in der Nähe des Zahnkopfes anders ausgebildet wird als an oder in der Nähe der ersten Flanke und/oder an oder in der Nähe der zweiten Flanke. An der linken bzw. ersten Flanke und der rechten bzw. zweiten Flanke sowie am Zahnkopf eines Zahns erfolgt im Betrieb des Wälzfräsers unterschiedlicher Verschleiß. Durch die vorgenannte Ausgestaltung der Erfindung ist in flexibler Weise eine Ausgestaltung entsprechend dem zu erwartenden Verschleiß möglich.

Nach einer weiteren Ausgestaltung kann vorgesehen sein, dass das mindestens eine Formelement an einer Spanfläche des Zahns ausgebildet ist und einen Abstand zu einer die Spanfläche und die erste Flanke verbindenden Schneidkante, zu einer die Spanfläche und die zweite Flanke verbindenden Schneidkante und/oder zu einer die Spanfläche mit dem Zahnkopf des Zahns verbindenden Schneidkante aufweist. Die Abstände können gleich sein. Es ist aber auch möglich, dass mindestens zwei Abstände, insbesondere alle Abstände, einen unterschiedlichen Betrag besitzen. Es ist auch denkbar, dass sich der Betrag mindestens eines der Abstände entlang der jeweiligen Schneidkante gesehen verändert, beispielsweise ab- oder zunimmt. Das Formelement kann also gegenüber der jeweiligen Schneidkante zum Beispiel schräg verlaufen. Der Abstand kann sich insbesondere auch in Richtung Zahnfuß verändern, beispielsweise ab- oder zunehmen. Mit diesen Ausgestaltungen ist eine noch präzisere Anpassung der Zähne bzw. Formelemente an den Einsatzbereich des Wälzfräsers möglich.

Durch die erfindungsgemäß mögliche flexible Ausgestaltung von Formelementen ist es in schneller und kostengünstiger Weise weiterhin möglich, an unterschiedlichen Zähnen des Wälzfräsers unterschiedliche Formelemente auszubilden. Insbesondere können beispielsweise an nacheinander mit einem mit dem Wälzfräser zu bearbeitenden Werkstück in Kontakt tretenden benachbarten Zähnen Formelemente ausgebildet werden, die diese benachbarten Zähne abwechselnd als Schruppzahn und als Schlichtzahn ausbilden. Eine solche Ausgestaltung kann beispielsweise bei Räumzahnfräsern zum Einsatz kommen. Es wechseln sich in Bearbeitungsrichtung der Zähne also Schrupp- und Schlichtzähne ab. Bei Schruppprofilen können beispielsweise mehrere in Schnittrichtung verlaufende Vertiefungen und/oder Erhebungen vorgesehen werden.

Es ist auch möglich, dass an mindestens einer Freifläche mindestens eines Zahns ein Formelement ausgebildet wird, welches einen maximal zulässigen Verschleiß des Zahns markiert. Beispielsweise kann eine solche Markierung anzeigen, bis auf welche Größe der Zahn maximal verschlissen bzw. bei einer Aufbereitung nach einem Verschleiß reduziert werden darf. Dadurch ist jederzeit sichergestellt, dass eine ausreichende Zahngröße für die weitere Bearbeitung zur Verfügung steht.

Ein Ausführungsbeispiel der Erfindung wird nachfolgend anhand von Figuren näher erläutert. Es zeigen schematisch:
- Fig. 1: einen Wälzfräser nach dem Stand der Technik in einer perspektivischen Ansicht,
- Fig. 2: einen Zahn eines mit dem erfindungsgemäßen Verfahren bereitgestellten Wälzfräsers in einer Draufsicht in Drehrichtung des Wälzfräsers gemäß einer ersten Ausgestaltung,
- Fig. 3: eine vergrößerte Darstellung des Ausschnitts A aus Fig. 2,
- Fig. 4: einen Schnitt entlang der Linie C-C in Fig. 3,
- Fig. 5: einen Zahn eines mit dem erfindungsgemäßen Verfahren bereitgestellten Wälzfräsers in einer Draufsicht in Drehrichtung des Wälzfräsers gemäß einer zweiten Ausgestaltung,
- Fig. 6: eine vergrößerte Darstellung des Ausschnitts A aus Fig. 5,
- Fig. 7: einen Schnitt entlang der Linie C-C in Fig. 6,
- Fig. 8: einen Zahn eines mit dem erfindungsgemäßen Verfahren bereitgestellten Wälzfräsers in einer Draufsicht in Drehrichtung des Wälzfräsers gemäß einer dritten Ausgestaltung,
- Fig. 9: eine vergrößerte Darstellung des Ausschnitts A aus Fig. 8,
- Fig. 10: einen Schnitt entlang der Linie C-C in Fig. 9,
- Fig. 11: eine ausschnittsweise perspektivische Seitenansicht eines Schruppzahns eines mit dem erfindungsgemäßen Verfahren bereitgestellten Wälzfräsers, und
- Fig. 12: eine ausschnittsweise Seitenansicht eines mit dem erfindungsgemäßen Verfahren bereitgestellten Wälzfräsers in Richtung seiner Drehachse mit gemäß Fig. 11 ausgebildeten Zähnen.

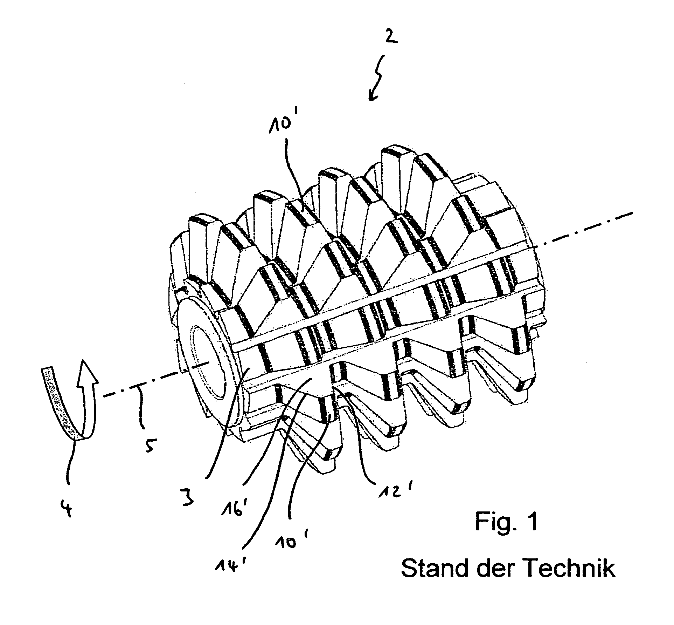

Soweit nichts anderes angegeben ist, bezeichnen in den Figuren gleiche Bezugszeichen gleiche Gegenstände. In Fig. 1 ist ein Wälzfräser 2 nach dem Stand der Technik in einer perspektivischen Ansicht gezeigt. Der Wälzfräser besitzt einen zylindrischen Grundkörper 3, auf dem eine Vielzahl von Zähnen 10' angeordnet ist. Wie durch den Pfeil 4 in Fig. 1 angedeutet, wird der Wälzfräser 2 im Betrieb um eine Drehachse 5 gedreht. Die Zähne besitzen jeweils eine Spanfläche 16' sowie eine erste, linke Flanke 12' und eine zweite, rechte Flanke 14'.

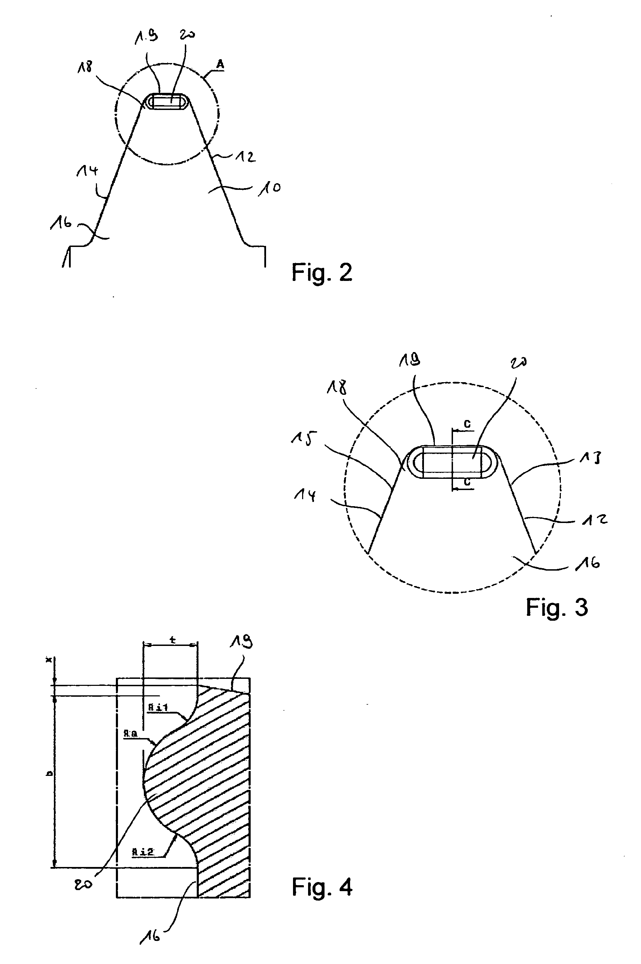

In den Figuren 2, 5 und 8 ist ein Zahn eines mit dem erfindungsgemäßen Verfahren bereitgestellten Wälzfräsers gemäß unterschiedlichen Ausführungsbeispielen in einer Draufsicht in Drehrichtung des Wälzfräsers gezeigt. Der Wälzfräser entspricht dabei abgesehen von der besonderen erfindungsgemäßen Ausbildung der Zähne dem in Fig. 1 gezeigten Wälzfräser. Der Wälzfräser kann beispielsweise aus einem Stahlwerkstoff bestehen. Solche Wälzfräser sind an sich bekannt.

Der in den Figuren gezeigte Zahn 10 besitzt wie die in Fig. 1 gezeigten konventionellen Zähne eine erste, linke Flanke 12 und eine zweite, rechte Flanke 14, zwischen denen eine Spanfläche 16 begrenzt ist. Die erfindungsgemäßen Zähne 10 unterscheiden sich von den in Fig. 1 dargestellten Zähnen jedoch durch das Vorsehen besonderer Formelemente. Bei dem in den Figuren 2 bis 4 gezeigten Ausführungsbeispiel ist im Bereich des Zahnkopfes 18 ein Formelement 20 auf der Spanfläche 16 ausgebildet, welches sich im Bereich des Zahnkopfes 18 über die gesamte Breite der Spanfläche 16 erstreckt. In der seitlichen Ansicht der Figuren 2 und 3 besitzt das Formelement 20 eine ovale Form. In der Schnittansicht in Figur 4 ist zu erkennen, dass sich das Formelement 20 mit etwa halbkreisförmigem Querschnitt von der Spanfläche 16 erhebt. Dabei besitzt das Formelement 20 einen Hauptaußenradius Rₐ, der mit dem Radius Rᵢ₁ entgegengesetzter Krümmung in den Zahnkopf 18 übergeht. An der gegenüberliegenden Seite und zum Zahnfuß hin geht die Erhebung 20 mit einem zweiten, beispielsweise anderen Radius Rᵢ₂ entgegengesetzter Krümmung in die Spanfläche 16 über. In vertikaler Richtung in Figur 4 besitzt die Erhebung 20 somit eine Ausdehnung b in Figur 4. Sie besitzt einen Abstand x in Figur 4 zu der oberen Schneidkante 19 des Zahnkopfes 18. In horizontaler Richtung in Figur 4 besitzt die Erhebung 20 eine Ausdehnung t gegenüber der Spanfläche 16. Die Erhebung 20 kann insbesondere als Spanleitstufe bzw. Spanformstufe die Spanbildung bzw. den Spanfluss im Betrieb des Wälzfräsers beeinflussen. Dazu können einige oder auch sämtliche Zähne des Wälzfräsers mit einer solchen Erhebung 20 versehen werden. Das Formelement 20 kann dabei einen Abstand sowohl zu der Schneidkante 19 als auch zu einer die Spanfläche 16 jeweils mit den Flanken 12, 14 verbindenden Schneidkante 13, 15 aufweisen. Diese Abstände des Formelements 22 zu der Schneidkante 19 sowie den Schneidkanten 13, 15 können sowohl den gleichen Betrag als auch jeweils einen unterschiedlichen Betrag besitzen. Es ist auch denkbar, dass sich einer oder mehrere dieser Abstände in Richtung der jeweils beabstandeten Schneidkante 13, 15, 19 gesehen verändern.

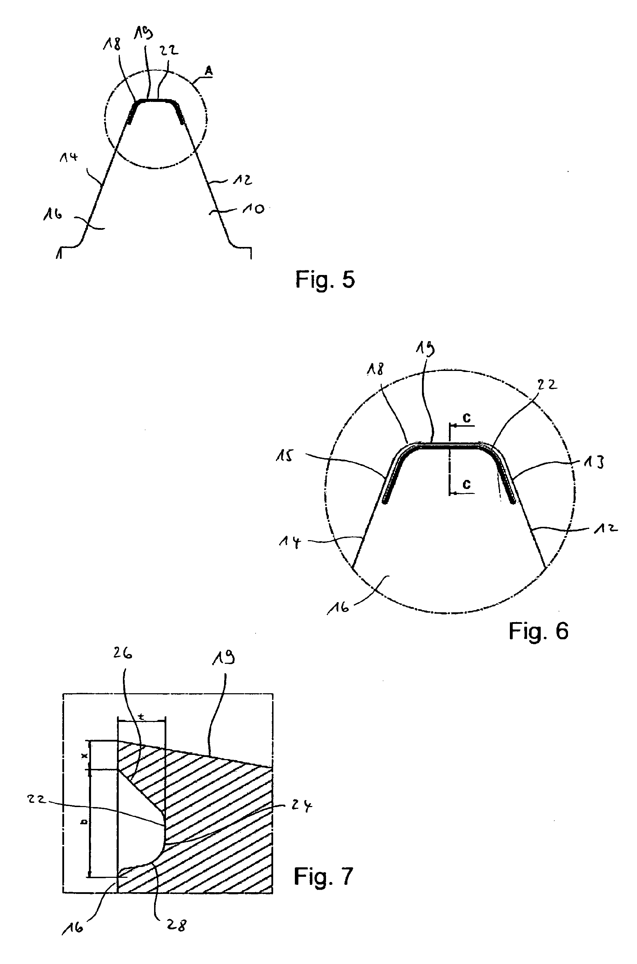

Der in den Figuren 5 bis 7 dargestellte Zahn nach einem zweiten Ausführungsbeispiel entspricht weitgehend dem Zahn aus den Figuren 2 bis 4. Bei diesem Ausführungsbeispiel ist allerdings im Bereich des Zahnkopfes 18 ein Formelement 22 in Form einer Vertiefung ausgebildet. Wie insbesondere in den Figuren 5 und 6 zu erkennen ist, erstreckt sich die Vertiefung des Formelements 22 auf der Spanfläche 16 über die gesamte Breite des Zahnkopfes 18 und über den oberen Bereich der einlaufenden und auslaufenden Zahnflanken 12, 14. In den Figuren 5 und 6 ist weiter zu erkennen, dass das Formelement 22 eine symmetrische Ausbildung aufweist und sich jeweils über im Wesentlichen die gleiche Länge entlang der linken und rechten Zahnflanke 12, 14 erstreckt. Das Formelement 22 ist dabei nahe der Flanken 12, 14 und des Zahnkopfes 18 gebildet. In dem Schnitt in Figur 7 ist zu erkennen, dass die Vertiefung des Formelements 22 sich in horizontaler Richtung in Figur 7 über eine Tiefe t erstreckt. In vertikaler Richtung in Figur 7 erstreckt sich die Vertiefung des Formelements 22 über eine Höhe b, wobei das Formelement 22 einen Abstand x zu der Schneidkante 19 des Zahnkopfes 18 aufweist. Das Formelement 22 kann dabei wiederum einen Abstand sowohl zu der Schneidkante 19 als auch zu einer die Spanfläche 16 jeweils mit den Flanken 12, 14 verbindenden Schneidkante 13, 15 besitzen. Diese Abstände des Formelements 22 zu der Schneidkante 19 sowie den Flanken 12 und 14 können wiederum sowohl den gleichen Betrag als auch jeweils einen unterschiedlichen Betrag besitzen. Es ist wiederum auch denkbar, dass sich einer oder mehrere dieser Abstände in Richtung der jeweils beabstandeten Schneidkante 13, 15, 19 gesehen verändern.

Im Querschnitt besitzt die Vertiefung des Formelements 22 einen im Wesentlichen parallel zur Spanfläche 16 verlaufenden Bodenabschnitt 24, der in Richtung des Zahnkopfes 18 in eine schräge, in die Spannfläche 16 mündende Fläche 26 übergeht. Am gegenüberliegenden Ende geht die Bodenfläche 24 in einen kreisförmig gekrümmten Bereich 28 über, der wiederum in die Spanfläche 16 mündet. Das in den Figuren 5 bis 7 dargestellte Formelement 22 kann wiederum an mehreren oder sämtlichen Zähnen des Wälzfräsers vorgesehen werden. Es handelt sich wiederum um eine Spanleitstufe bzw. Spanformstufe, die die Spanformung bzw. den Spanfluss im Betrieb in gewünschter Weise beeinflusst.

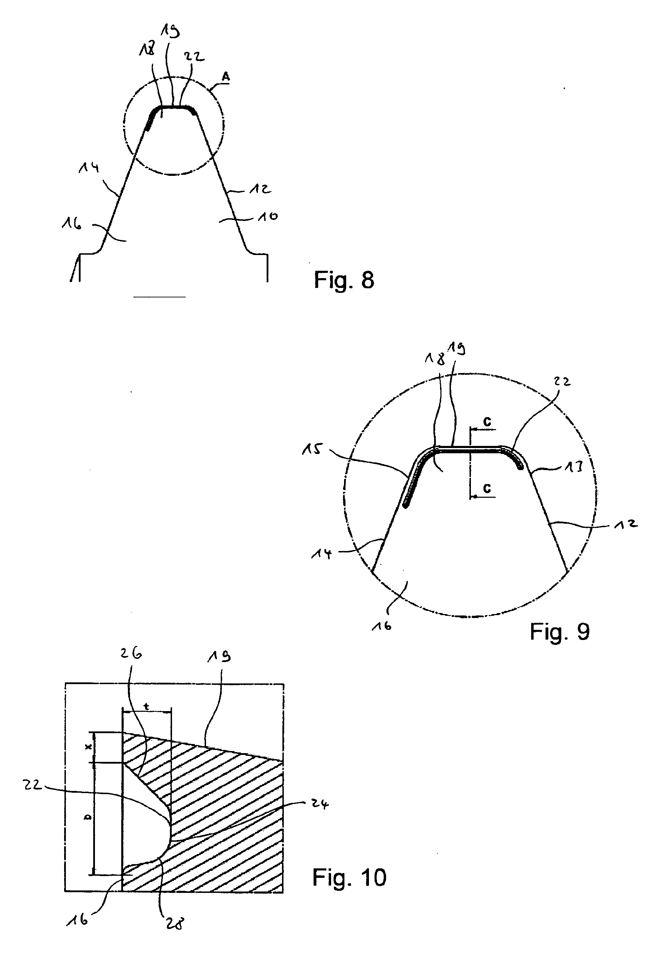

Das in den Figuren 8 bis 10 dargestellte Ausführungsbeispiel entspricht weitgehend dem Ausführungsbeispiel nach den Figuren 5 bis 7. Im Unterschied zu dem Beispiel nach den Figuren 5 bis 7 ist das als Vertiefung ausgebildete Formelement 22 bei dem Ausführungsbeispiel nach den Figuren 8 bis 10 jedoch asymmetrisch ausgebildet. So erstreckt sich das wiederum als Spanleitstufe bzw. Spanformstufe ausgebildete Formelement 22 bei dieser Ausgestaltung entlang der linken Flanke 12 über einen geringeren Bereich als entlang der rechten Flanke 14. Durch diese Ausgestaltung kann dem unterschiedlichen Verschließ an der linken und rechten Flanke 12, 14 Rechnung getragen werden.

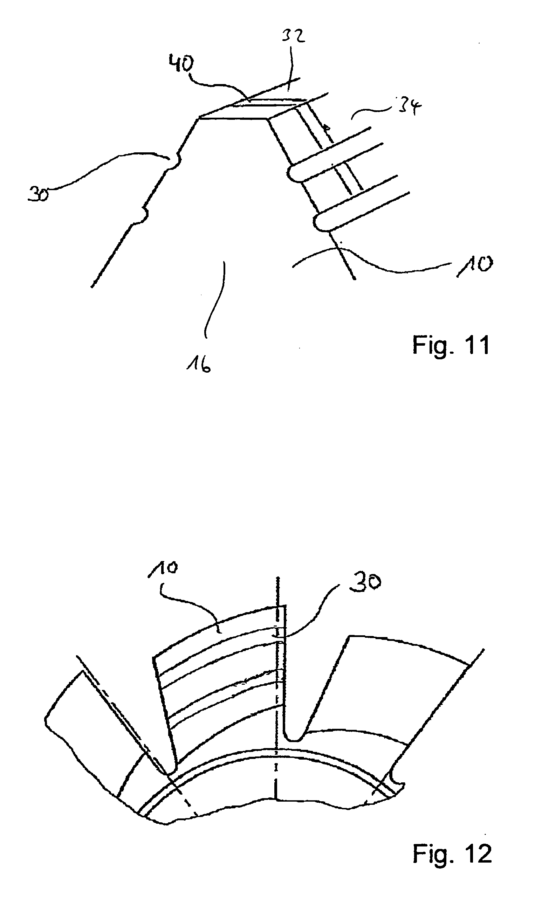

In den Figuren 11 und 12 ist ein als Schruppzahn ausgebildeter Zahn 10 gezeigt. Dazu sind an diesem Zahn 10 mehrere in Schnittrichtung verlaufende Vertiefungen 30 als Formelemente ausgebildet. Darüber hinaus besitzt dieser Zahn 10, wie in Fig. 11 zu erkennen, eine über seine Freiflächen 32, 34 verlaufende Markierung 40, die einen maximal zulässigen Verschleiß des Zahns 10 anzeigt.

Zur Herstellung der in den Figuren dargestellten Formelemente 20, 22 kann insbesondere ein Schaftfräser zum Einsatz kommen, der über eine geeignete Steuereinrichtung gemäß Bedienervorgaben zur automatischen Formung der Formelemente 20, 22 bzw. Zähne 10 angesteuert wird. Es ist damit in flexibler, einfacher, schneller und somit kostengünstiger Weise eine individuelle und flexible Formgebung der Zähne und Formelemente möglich.

## Patentansprüche

1. Verfahren zum Herstellen eines Wälzfräsers mit einer Mehrzahl von an einem Fräskörper vorgesehenen Zähnen (10), **dadurch gekennzeichnet, dass** der Fräskörper in eine Fräsmaschine eingespannt wird und in der Fräsmaschine mittels eines Fertigfräsverfahrens an mindestens einem der Zähne (10) ein Formelement (20, 22, 30, 40) ausgebildet wird, wobei das mindestens eine Formelement dazu ausgebildet ist, die Spanbildung und/oder den Spanfluss im Betrieb des Wälzfräsers zu beeinflussen oder wobei das mindestens eine Formelement an mindestens einer Freifläche mindestens eines Zahns (10) ausgebildet wird und einen maximal zulässigen Verschleiß des Zahns (10) markiert.

2. Verfahren nach Anspruch 1, **dadurch gekennzeichnet, dass** mittels des Fertigfräsverfahrens an einer Mehrzahl von Zähnen (10), insbesondere an sämtlichen Zähnen (10), Formelemente (20, 22, 30, 40) ausgebildet werden.

3. Verfahren nach Anspruch 1 oder Anspruch 2, **dadurch gekennzeichnet, dass** ein Fraskörperrohling ohne Zähne in die Fräsmaschine eingespannt wird und in der Fräsmaschine mittels des Fertigfräsverfahrens sowohl die Zähne (10) an dem Fräskörper als auch das mindestens eine Formelement (20, 22, 30, 40) an mindestens einem der Zähne (10) ausgebildet werden.

4. Verfahren nach einem der Ansprüche 1 oder 2, **dadurch gekennzeichnet, dass** in die Fräsmaschine ein bereits Zähne (10) und gegebenenfalls bereits mindestens ein Formelement (20, 22, 30, 40) aufweisender Fräskörper eingespannt wird.

5. Verfahren nach einem der vorhergehenden Ansprüche, **dadurch gekennzeichnet, dass** mindestens ein Formelement (20, 22) eine Spanleitstufe (20, 22) ist.

6. Verfahren nach einem der vorhergehenden Ansprüche, **dadurch gekennzeichnet, dass** das Fertigfräsverfahren in einer mindestens fünf Bewegungsachsen aufweisenden Fräsmaschine durchgeführt wird.

7. Verfahren nach einem der vorhergehenden Ansprüche, **dadurch gekennzeichnet, dass** das mindestens eine Formelement (20, 22, 30, 40) mit mindestens einer Erhebung und/oder mindestens einer Vertiefung ausgebildet wird.

8. Verfahren nach einem der vorhergehenden Ansprüche, **dadurch gekennzeichnet, dass** mindestens ein Formelement (20, 22, 30, 40) an oder in der Nähe einer ersten Flanke (12) und/oder an oder in der Nähe einer zweiten Flanke (14) und/oder an oder in der Nähe des Zahnkopfes (19) eines Zahns (10) ausgebildet wird.

9. Verfahren nach Anspruch 8, **dadurch gekennzeichnet, dass** das mindestens eine Formelement (20, 22, 30, 40) an oder in der Nähe der ersten Flanke (12) anders ausgebildet wird als an oder in der Nähe der zweiten Flanke (14) und/oder dass das mindestens eine Formelement (20, 22, 30, 40) an oder in der Nähe des Zahnkopfes (19) anders ausgebildet wird als an oder in der Nähe der ersten Flanke (12) und/oder an oder in der Nähe der zweiten Flanke (14).

10. Verfahren nach einem der vorhergehenden Ansprüche, dadurch gekennzeichnct, dass das mindestens eine Formelement (20, 22) an einer Spanfläche (16) des Zahns (10) ausgebildet ist und einen Abstand zu einer die Spanfläche (16) und die erste Flanke (12) verbindenden Schneidkante, zu einer die Spanfläche (16) und die zweite Flanke (14) verbindenden Schneidkante und/oder zu einer die Spanfläche (16) mit dem Zahnkopf (18) des Zahns (10) verbindenden Schneidkante (19) aufweist.

11. Verfahren nach Anspruch 10, **dadurch gekennzeichnet, dass** die Abstände gleich sind oder, dass mindestens zwei Abstände einen unterschiedlichen Betrag besitzen.

12. Verfahren nach Anspruch 10 oder Anspruch 11, **dadurch gekennzeichnet, dass** sich mindestens einer der Abstände entlang der jeweiligen Schneidkante (19) verändert.

13. Verfahren nach einem der vorhergehenden Ansprüche, **dadurch gekennzeichnet, dass** an unterschiedlichen Zähnen (10) des Wälzfräsers unterschiedliche Formelemente (20, 22, 30, 40) ausgebildet werden.

14. Verfahren nach Anspruch 13, **dadurch gekennzeichnet, dass** an nacheinander mit einem mit dem Wälzfräser zu bearbeitenden Werkstück in Kontakt tretenden benachbarten Zähnen (10) Formelemente (30) ausgebildet werden, die die benachbarten Zähne (10) abwechselnd als Schruppzahn und als Schlichtzahn ausbilden.

## Claims

1. A method for producing a hob with a plurality of teeth (10) provided on a milling body, **characterized in that** the milling body is clamped in a milling machine, and a shaped element (20, 22, 30, 40) is formed in the milling machine on at least one of the teeth (10) by means of a finish milling method, wherein the at least one shaped element is formed to influence the chip formation and/or chip flow while operating the hob, or wherein the at least one shaped element is formed on at least one free surface of at least one tooth (10), and marks a maximum permissible wear of the tooth (10).

2. The method according to claim 1, **characterized in that** shaped elements (20, 22, 30, 40) are formed on a plurality of teeth (10), especially on all the teeth (10), by means of the finish milling method.

3. The method according to claim 1 or 2, **characterized in that** a milling body blank without teeth is clamped in the milling machine, and both the teeth (10) are formed on the milling body, as well as at least one shaped element (20, 22, 30, 40) is formed on at least one of the teeth (10) in the milling machine by means of the finish milling method.

4. The method according to one of claims 1 or 2, **characterized in that** a milling body that already has teeth and that may already have at least one shaped element (20, 22, 30, 40) is clamped in the milling machine.

5. The method according to one of the prior claims, characterized that at least one shaped element (20, 22) is a chip breaker (20, 22).

6. The method according to one of the prior claims, **characterized in that** the finish milling method is performed in a milling machine having at least five axes of movement.

7. The method according to one of the prior claims, **characterized in that** the at least one shaped element (20, 22, 30, 40) is formed with at least one elevation and/or at least one recess.

8. The method according to one of the prior claims, **characterized in that** at least one shaped element (20, 22, 30, 40) is formed on or near a first flank (12) and/or on or near a second flank (14) and/or on or near the tooth head (19) of a tooth (10).

9. The method according to claim 8, **characterized in that** least one shaped element (20, 22, 30, 40) on or near the first flank (12) is formed differently than on or near the second flank (14), and/or the at least one shaped element (20, 22, 30, 40) on or near the tooth head (19) is formed differently than on or near the first flank (12) and/or on or near the second flank (14).

10. The method according to one of the prior claims, **characterized in that** the at least one shaped element (20, 22) is formed on a cutting face (16) of the tooth (10) and has a distance to a cutting edge connecting the cutting face (16) and the first flank (12), to a cutting edge connecting the cutting face (16) and the second flank (14), and/or a to a cutting edge connecting the cutting face (16) with the tooth head (18) of the tooth (10).

11. The method according to claim 10, **characterized in that** the distances are the same, or at least two distances have a different amount.

12. The method according to claim 10 or 11, **characterized in that** least one of the distances changes along the respective cutting edge (19).

13. The method according to one of the prior claims, **characterized in that** different shaped elements (20, 22, 30, 40) are formed on different teeth (10) of the hob.

14. The method according to claim 13, **characterized in that** shaped elements (30) are formed on the neighboring teeth (10) that sequentially come into contact with the workpiece to be machined by means of the hob, and the shaped elements alternately form the neighboring teeth (10) as a roughing tooth and a finishing tooth.

## Revendications

1. Procédé de fabrication d'une fraise mère avec une pluralité de dents (10) prévues sur un corps de fraise, **caractérisé en ce que** le corps de fraise est serré dans une fraiseuse et **en ce qu'**un élément de forme (20, 22, 30, 40) est réalisé dans la fraiseuse au moyen d'un procédé de finissage à la fraise sur au moins une des dents (10) , l'élément de forme au moins au nombre de un étant réalisé pour agir sur la formation de copeaux et/ou sur les flux de copeaux pendant le fonctionnement de la fraise mère, ou l'élément de forme au moins au nombre de un étant réalisé sur au moins une face de dépouille d'au moins une dent (10) et repérant une usure maximale admissible de la dent (10).

2. Procédé selon la revendication 1, **caractérisé en ce que** des éléments de forme (20, 22, 30, 40) sont réalisés au moyen du procédé de finissage à la fraise sur une pluralité de dents (10), en particulier sur toutes les dents (10).

3. Procédé selon la revendication 1 ou la revendication 2, **caractérisé en ce qu'**une ébauche de corps de fraise sans dents est serrée dans la fraiseuse et **en ce que**, dans la fraise et au moyen du procédé de finissage à la fraise, les dents (10) sont réalisées sur le corps de fraise, de même que l'élément de forme (20, 22, 30, 40) au moins au nombre de un est réalisé sur au moins une des dents (10).

4. Procédé selon une des revendications 1 ou 2, **caractérisé en ce qu'**un corps de fraise présentant déjà des dents (10) et présentant éventuellement déjà au moins un élément de forme (20, 22, 30, 40) est serré dans la fraise.

5. Procédé selon une des revendications précédentes, **caractérisé en ce qu'**au moins un élément de forme (20, 22) est un gradin de guidage de copeaux (20, 22).

6. Procédé selon une des revendications précédentes, **caractérisé en ce que** le procédé de finissage à la fraise est exécuté dans une fraiseuse présentant au moins cinq axes de mouvement.

7. Procédé selon une des revendications précédentes, **caractérisé en ce que** l'élément de forme (20, 22, 30, 40) au moins au nombre de un est réalisé avec au moins une élévation et/ou au moins un creux.

8. Procédé selon une des revendications précédentes, **caractérisé en ce qu'**au moins un élément de forme (20, 22, 30, 40) est réalisé sur ou à proximité d'un premier flanc (12) et/ou sur ou à proximité d'un deuxième flanc (14) et/ou sur ou à proximité de la tête de dent (19) d'une dent (10).

9. Procédé selon la revendication 8, **caractérisé en ce que** l'élément de forme (20, 22, 30, 40) au moins au nombre de un est réalisé sur ou à proximité du premier flanc (12) d'une façon qui n'est pas la même que sur ou à proximité du deuxième flanc (14), et/ou en ce que l'élément de forme (20, 22, 30, 40) au moins au nombre de un est réalisé sur ou à proximité de la tête de dent (19) d'une façon qui n'est pas la même que sur ou à proximité du premier flanc (12) et/ou sur ou à proximité du deuxième flanc (14).

10. Procédé selon une des revendications précédentes, **caractérisé en ce que** l'élément de forme (20, 22) au moins au nombre de un est réalisé sur une face de coupe (16) de la dent (10) et présente une distance à une arête de coupe raccordant la face de coupe (16) et le premier flanc (12), à une arête de coupe raccordant la face de coupe (16) et le deuxième flanc (14) et/ou à une arête de coupe (19) raccordant la face de coupe (16) à la tête de dent (18) de la dent (10).

11. Procédé selon la revendication 10, **caractérisé en ce que** les distances sont égales ou **en ce qu'**au moins deux distances ont une valeur différente.

12. Procédé selon la revendication 10 ou la revendication 11, **caractérisé en ce qu'**au moins une des distances varie le long de l'arête de coupe (19) respective.

13. Procédé selon une des revendications précédentes, **caractérisé en ce que** différents éléments de forme (20, 22, 30, 40) sont réalisés sur différentes dents (10) de la fraise mère.

14. Procédé selon la revendication 13, **caractérisé en ce que**, sur des dents (10) voisines entrant successivement en contact avec une pièce à usiner avec la fraise mère, ils sont réalisés des éléments de forme (30) qui réalisent les dents (10) voisines de façon alternée en tant que dent dégrossisseuse et en tant que dent de finition.
